# FASCICULE DE BREVET EUROPEEN

(11) **EP 2 543 864 B1**
(45) Date de publication et mention de la délivrance du brevet: **29.07.2015**
(21) Numéro de dépôt: 12173763.9
(22) Date de dépôt: 27.06.2012
(51) Int. Cl.: B64D 33/04, F02K 1/82, B64D 29/00, B64C 7/02, F02K 1/34, F01D 25/14, F02C 7/20

(54) **Ensemble propulsif avec un plancher de protection thermique d'un carenage aérodynamique arrière d'un mat d'accrochage et procéde de refroidissement du plancher de protection thermique**
Antriebseinheit eines Luftfahrzeugs mit einem Hitzeschild einer hinteren Stromlinienverkleidung einer Triebwerksaufhängung sowie Kühlverfahren für das Hitzeschild
Aircraft propulsion assembly with a heat shield for thermal protection of a rear aerodynamic fairing of a pylon and a cooling method for the heat shield

(30) Priorité: 07.07.2011 FR 1156174
(43) Date de publication de la demande: 09.01.2013
(73) Titulaire: Airbus Operations (Société par actions simplifiée), 31060 Toulouse (FR)
(72) Inventeur: Raison, Fabien, 31830 Plaisance du Touch (FR); Dumont, Emmanuelle, 31300 Toulouse (FR)
(74) Mandataire: Augarde, Eric

(56) Documents cités:
- EP-A1- 0 743 435
- EP-A2- 1 004 759
- GB-A- 2 302 371
- US-A- 5 203 163
- US-A1- 2007 245 739
- US-A1- 2008 202 847
- US-A1- 2008 245 926
- US-A1- 2010 170 220

## Description

### DOMAINE TECHNIQUE

La présente invention se rapporte au domaine des mâts d'accrochage de moteur d'aéronef et concerne plus précisément la protection thermique d'un mât d'accrochage de turboréacteur à double flux.

D'une manière générale, un mât d'accrochage, également dénommé *« EMS »* (de l'anglais *« Engine Mounting Structure »*), permet de suspendre un moteur au-dessous de la voilure d'un aéronef, de monter ce moteur au-dessus de cette même voilure, ou encore de rapporter ce moteur en partie arrière du fuselage de l'aéronef.

### ÉTAT DE LA TECHNIQUE ANTÉRIEURE

Un tel mât d'accrochage est en effet prévu pour constituer l'interface de liaison entre un moteur et une voilure de l'aéronef. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le mât d'accrochage comporte une structure rigide également dénommée structure primaire, habituellement du type « caisson », c'est-à-dire formée par l'assemblage de longerons supérieurs et inférieurs et de panneaux latéraux raccordés entre eux par l'intermédiaire de nervures transversales de rigidification.

D'autre part, le dispositif est muni de moyens d'accrochage interposés entre le moteur et la structure rigide, ces moyens comportant d'une manière générale deux attaches moteur, ainsi qu'un dispositif de reprise des efforts de poussée générés par le moteur. Dans l'art antérieur, ce dispositif de reprise comprend habituellement deux bielles latérales raccordées d'une part à une partie arrière du carter de soufflante du moteur, et d'autre part à une attache arrière fixée sur le carter central de ce dernier.

De la même façon, le mât d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant la ségrégation et le maintien des systèmes tout en supportant des éléments de carénage aérodynamique, ces derniers prenant généralement la forme d'assemblages de panneaux rapportés sur les structures. De façon connue de l'homme du métier, les structures secondaires se différencient de la structure rigide par le fait qu'elles ne sont pas destinées à assurer le transfert des efforts provenant du moteur et devant être transmis vers la voilure de l'aéronef.

Parmi les structures secondaires, on compte le carénage aérodynamique arrière, également dénommé « *APF* » (de l'anglais *« Aft Pylon Fairing »*), qui assure une pluralité de fonctions parmi lesquelles on note la formation d'une barrière thermique ou anti-feu, et la formation d'une continuité aérodynamique entre la sortie du moteur et le mât d'accrochage. Le carénage adopte une position inférieure lorsque le moteur est destiné à être placé sous l'aile, et adopte une position supérieure lorsque le moteur est destiné à être placé au-dessus de l'aile. EP 0 743 435 A1 est consideré l'état de la technique le plus proche. Un exemple de carénage connu de l'art antérieur est divulgué dans le document EP 2 190 739.

Ce carénage aérodynamique arrière prend généralement la forme d'un caisson comprenant deux panneaux latéraux assemblés entre eux par des nervures intérieures transversales de rigidification espacées les unes des autres selon une direction longitudinale du carénage, ainsi qu'un plancher de protection thermique.

Les panneaux latéraux du carénage aérodynamique arrière sont prévus pour être épousés extérieurement par un flux secondaire du moteur, en raison de leur implantation dans le canal annulaire de flux secondaire du moteur et/ou en sortie de ce canal.

Le plancher de protection thermique présente une face externe prévue pour être épousée par un flux primaire du moteur, constitué de gaz d'échappement pouvant atteindre des températures de l'ordre de 540°C, ces températures tendant à augmenter avec les récents développements des techniques mises en oeuvre dans les turboréacteurs.

Cette augmentation de température du flux primaire pose de nombreux problèmes à l'égard notamment de la résistance thermique et de la dilatation thermique des matériaux formant le plancher de protection thermique, ainsi que du bruit de jet qui tend à s'intensifier en conséquence.

En outre, une partie d'extrémité avant du plancher de protection thermique est habituellement disposée au droit et à relativement faible distance de la face externe d'une tuyère d'échappement du turboréacteur, dont la face interne est épousée par le flux primaire relativement chaud tandis que la face externe est baignée par le flux secondaire relativement froid du turboréacteur.

Or, la région de cette tuyère qui est située en regard de la partie d'extrémité avant précitée du plancher de protection thermique n'est pas baignée ou est peu baignée par le flux secondaire et présente donc une température considérablement plus élevée que le reste de la tuyère. Cette région la plus chaude de la tuyère tend de surcroît à réchauffer par rayonnement la partie d'extrémité avant du plancher de protection thermique, de sorte que cette dernière peut atteindre des températures considérablement plus élevées que le reste de ce plancher.

Ce phénomène est particulièrement prononcé lorsque le carénage aérodynamique arrière du mât d'accrochage s'étend dans le prolongement d'une bifurcation, c'est-à-dire d'une région isolée du flux secondaire dans laquelle s'étend une partie de la structure rigide du mât d'accrochage et certains des moyens d'accrochage du moteur à cette structure rigide, étant donné qu'une telle bifurcation forme un obstacle à la pénétration du flux secondaire dans l'espace relativement mince compris entre le plancher de protection thermique et la tuyère d'échappement.

### EXPOSÉ DE L'INVENTION

L'invention a notamment pour but d'apporter une solution simple, économique et efficace à ces problèmes, permettant d'éviter au moins en partie les inconvénients précités.

Elle propose à cet effet un Ensemble propulsif pour aéronef comme défini dans la revendication 1, comportant un turboréacteur à double flux ainsi qu'un mât d'accrochage destiné à l'accrochage de ce turboréacteur à la voilure ou au fuselage d'un aéronef, ledit mât d'accrochage comprenant un carénage aérodynamique arrière comportant un plancher de protection thermique pour protéger ledit mât d'accrochage de la chaleur d'un flux primaire provenant d'une tuyère d'échappement dudit turboréacteur.

Selon l'invention, l'ensemble propulsif comprend des moyens de prélèvement d'un flux d'air de refroidissement dans un flux secondaire du turboréacteur ainsi que des moyens de circulation d'air alimentés par lesdits moyens de prélèvement et présentant au moins un orifice de sortie débouchant dans un espace compris entre le plancher de protection thermique et la tuyère d'échappement.

L'invention permet ainsi l'injection d'une partie du flux secondaire, formant ledit flux d'air de refroidissement, dans l'espace relativement mince compris entre le plancher de protection thermique et la tuyère d'échappement.

Cet espace étant délimité par les parties les plus chaudes du plancher de protection thermique d'une part, et de la tuyère d'échappement d'autre part, l'invention permet ainsi une homogénéisation de la température au sein de ces deux éléments, et donc un accroissement considérable de leur durée de vie.

Selon l'invention, lesdits moyens de prélèvement comprennent au moins une prise d'air raccordée auxdits moyens de circulation d'air et formée dans une paroi aérodynamique de l'ensemble propulsif, paroi qui est épousée par le flux secondaire en fonctionnement.

Une telle prise d'air permet un prélèvement d'air tout en limitant les perturbations du flux secondaire.

A cet effet, la prise d'air est avantageusement une prise aérodynamique, en particulier du type bien connu sous l'acronyme NACA.

Par ailleurs, la paroi aérodynamique dont il s'agit ici peut être toute paroi baignée par le flux secondaire, comme par exemple une enveloppe interne ou externe de nacelle, et cette paroi est de préférence une paroi s'étendant longitudinalement en regard d'une autre paroi aérodynamique similaire dudit ensemble propulsif, avec laquelle elle délimite une cavité sensiblement isolée dudit flux secondaire.

En particulier, dans le mode de réalisation préféré de l'invention, lesdites parois aérodynamiques sont des parois de bifurcation reliant mutuellement deux enveloppes annulaires de nacelle qui délimitent, respectivement intérieurement et extérieurement, un espace annulaire d'écoulement dudit flux secondaire dans ledit turboréacteur.

Dans ce cas, les parois aérodynamiques précitées forment une bifurcation au sein de l'espace d'écoulement du flux secondaire, et la cavité définie entre ces deux parois permet, d'une manière connue en soi, le passage d'une partie avant d'une structure rigide du mât d'accrochage qui porte des moyens d'accrochage du turboréacteur.

En variante, lesdites parois aérodynamiques peuvent être des parois latérales du carénage aérodynamique arrière.

Dans ce cas, la cavité définie entre ces parois constitue l'espace intérieur de ce carénage.

Dans tous les cas, lesdits moyens de prélèvement comprennent avantageusement deux prises d'air formées respectivement dans les deux parois aérodynamiques longitudinales précitées s'étendant en regard l'une de l'autre.

D'une manière générale, lesdits moyens de circulation d'air comprennent de préférence au moins un tuyau s'étendant au moins en partie dans la cavité précitée.

Un tel tuyau permet une canalisation efficace du flux d'air de refroidissement.

De plus, le logement de ce tuyau dans ladite cavité isolée du flux secondaire permet d'éviter au mieux les perturbations de ce flux secondaire.

Par ailleurs, l'orifice de sortie précité desdits moyens de circulation d'air débouche de préférence au niveau d'une extrémité avant dudit espace compris entre le plancher de protection thermique et la tuyère d'échappement.

Dans ce cas, l'orifice de sortie desdits moyens de circulation d'air présente avantageusement un axe d'éjection d'air sensiblement parallèle à une partie d'extrémité avant du plancher de protection thermique.

Ainsi, l'air de refroidissement peut être injecté dans cet espace selon une direction orientée vers l'arrière sensiblement tangentielle au plancher de protection thermique, et baigner ainsi au mieux les parties respectives du plancher de protection thermique et de la tuyère d'échappement qui délimitent ledit espace.

De plus, lorsque le débit du flux d'air de refroidissement est suffisamment élevé, ce flux peut former un film d'air relativement frais le long du plancher de protection thermique, au-delà de l'extrémité arrière de la tuyère d'échappement, et s'intercaler ainsi entre une partie de ce plancher et le flux primaire de manière à protéger cette partie du plancher de la chaleur de ce flux primaire.

En variante, l'orifice de sortie desdits moyens de circulation d'air peut traverser le plancher de protection thermique.

Dans ce cas, l'air de refroidissement peut être injecté dans ledit espace en passant au travers du plancher de protection thermique et se répandre le long de la tuyère d'échappement dans ledit espace d'une manière grossièrement centrifuge depuis l'orifice de sortie précité.

D'une manière générale, l'ensemble propulsif selon l'invention comprend de préférence des joints latéraux d'étanchéité qui délimitent latéralement ledit espace compris entre le plancher de protection thermique et la tuyère d'échappement.

L'utilisation de tels joints est connue pour limiter les risques de remontée d'air chaud du flux primaire du turboréacteur dans l'espace compris entre le plancher et la tuyère précités.

Dans le cadre de l'invention, ces joints présentent toutefois un intérêt supplémentaire en ce qu'ils permettent de canaliser l'air de refroidissement diffusé par lesdits moyens de circulation d'air au sein de l'espace précité et donc d'améliorer l'efficacité du refroidissement des parties respectives du plancher de protection thermique et de la tuyère d'échappement qui délimitent cet espace.

L'invention concerne également un aéronef comprenant au moins un ensemble propulsif du type décrit ci-dessus.

L'invention concerne encore un procédé de refroidissement d'un plancher de protection thermique d'un carénage aérodynamique arrière d'un mât d'accrochage d'un ensemble propulsif du type décrit ci-dessus comme defini dans la revendication 7, dans lequel de l'air de refroidissement est prélevé dans le flux secondaire du turboréacteur de cet ensemble propulsif par lesdits moyens de prélèvement et est injecté dans ledit espace compris entre le plancher de protection thermique et la tuyère d'échappement du turboréacteur par lesdits moyens de circulation d'air.

Ce procédé présente bien entendu les mêmes avantages que ceux indiqués ci-dessus à propos de l'ensemble propulsif lui-même.

De plus, dans ce procédé, l'air de refroidissement est de préférence injecté dans ledit espace selon une direction sensiblement parallèle audit plancher de protection thermique de manière à former un film d'air de refroidissement entre ledit plancher de protection thermique et ledit flux primaire du turboréacteur.

L'intérêt d'un tel film d'air a également été expliqué ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels:
- les figure 1 et 2 sont des vues schématiques partielles de côté d'un ensemble propulsif pour aéronef selon un premier mode de réalisation préféré de la présente invention ;
- les figures 3 à 6 sont des vues schématiques partielles en perspective de l'ensemble propulsif de la figure 1 ;
- la figure 7 est une vue schématique partielle en perspective d'un ensemble propulsif pour aéronef selon un deuxième mode de réalisation préféré de la présente invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

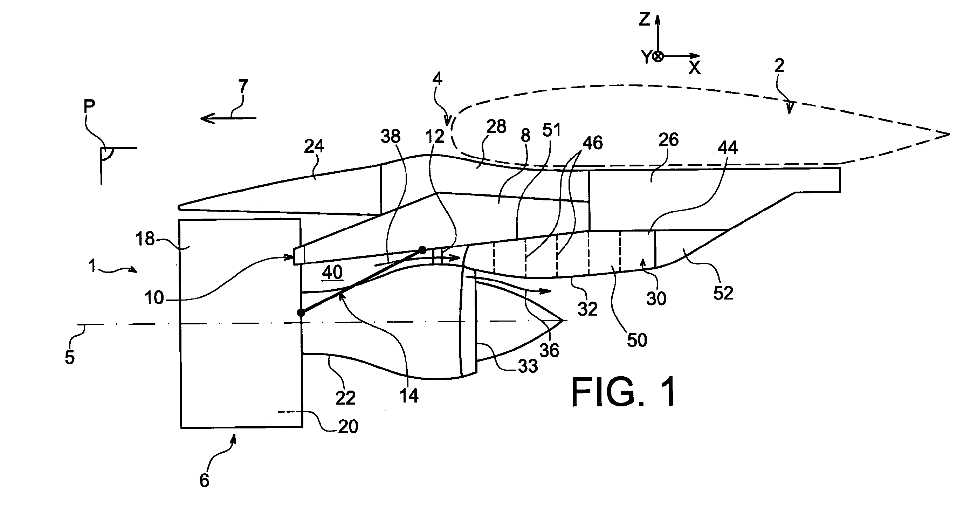

En référence à la figure 1, on voit un ensemble propulsif 1 pour aéronef selon un premier mode de réalisation préféré de la présente invention, destiné à être fixé sous une aile 2 de cet aéronef, cet ensemble propulsif 1 comportant un mât d'accrochage 4, ainsi qu'un turboréacteur à double flux 6 accroché sous ce mât d'accrochage 4.

Globalement, le mât d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif 14 de reprise des efforts de poussée générés par le turboréacteur 6.

Le mât d'accrochage 4 comporte une autre série d'attaches (non représentées) rapportées sur la structure rigide 8 et permettant d'assurer la suspension de cet ensemble propulsif 1 sous la voilure 2 de l'aéronef.

Par ailleurs, l'ensemble propulsif 1 est destiné à être entouré d'une nacelle (non représentée).

Dans toute la description qui va suivre, par convention, on appelle X la direction longitudinale du dispositif 4 qui est également assimilable à la direction longitudinale du turboréacteur 6 et à celle du carénage aérodynamique arrière inférieur qui sera présenté ci-après, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6 et à celle du carénage aérodynamique arrière inférieur, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef lors du fonctionnement du turboréacteur 6, cette direction étant représentée schématiquement par la flèche 7.

Sur la figure 1, on peut donc voir les deux attaches moteur 10, 12, le dispositif de reprise des efforts de poussée 14, la structure rigide 8 du mât d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrites ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

La structure rigide 8 prend la forme d'un caisson s'étendant de l'arrière vers l'avant, sensiblement selon la direction X, pourvu de nervures transversales (non représentées) prenant chacune la forme d'un rectangle orienté dans un plan YZ.

Les moyens d'accrochage comportent tout d'abord l'attache moteur avant 10 interposée entre une extrémité avant de la structure rigide 8 également appelée pyramide, et une partie supérieure du carter de soufflante 18. L'attache moteur avant 10 est conçue de manière classique et connue de l'homme du métier.

D'autre part, l'attache moteur arrière 12, également réalisée de façon classique et connue de l'homme du métier, est quant à elle interposée entre la structure rigide 8 et le carter central 22.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier.

Plus précisément, la structure aérodynamique avant 24 est placée dans le prolongement avant inférieur de la voilure 2 et au-dessus de la structure primaire 8. Elle est montée fixement sur la structure rigide 8, et présente une fonction de profil aérodynamique entre une partie supérieure de capots de soufflante articulés sur cette structure aérodynamique avant 24, et le bord d'attaque de la voilure. Cette structure aérodynamique avant 24 dispose alors non seulement d'une fonction de carénage aérodynamique, mais elle permet également la mise en place, la ségrégation et le cheminement de différents systèmes (air, électrique, hydraulique, carburant). De plus, la partie avant de cette structure 24 n'étant pas au contact de la structure rigide 8, il est habituellement interposé un échangeur thermique dans l'espace défini entre ces deux éléments.

Directement dans le prolongement arrière de cette structure 24, toujours sous la voilure et monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, dite RSS (de l'anglais *« Rear Secondary Structure* »), qui contient une partie des équipements du mât. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou *« Aft Pylon Fairing* ». Ses fonctions essentielles sont la formation d'une barrière thermique également dite anti-feu servant à protéger le mât et la voilure de la chaleur dégagée par le flux primaire, et la formation d'une continuité aérodynamique entre la sortie du moteur et le mât d'accrochage.

De manière connue de l'homme du métier, le carénage aérodynamique arrière inférieur 30 précité comporte un plancher de protection thermique 32 pourvu d'une surface extérieure destinée à être épousée par un flux primaire du moteur qu'il délimite partiellement radialement vers l'extérieur, ce flux primaire, représenté schématiquement par la flèche 36, s'échappant d'une tuyère 33 du moteur.

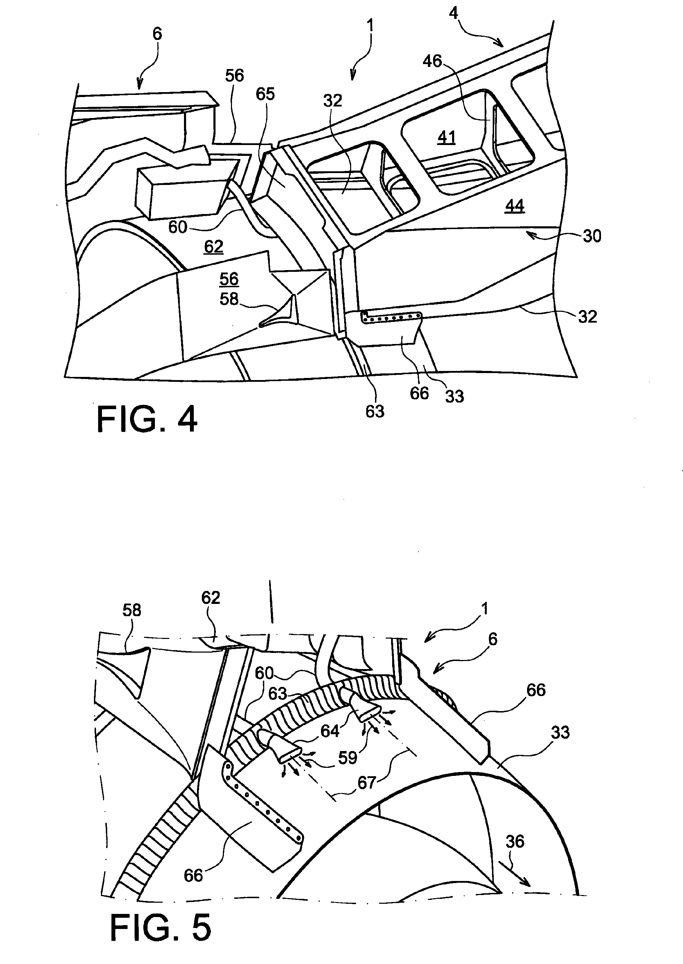

Par ailleurs, le carénage 30 comporte aussi deux panneaux latéraux 44 qui sont quant à eux prévus pour être épousés extérieurement par un flux secondaire du moteur représenté schématiquement par la flèche 38, en raison de leur implantation dans le canal annulaire 40 de flux secondaire du moteur (figure 1) et/ou en sortie de celui-ci. Le carénage 30 se présente ainsi sous la forme d'un caisson comportant une cavité interne 41 (figure 4).

Il est noté que dans les modes de réalisation préférés décrits ici, dans lesquels le turboréacteur 6 est destiné à être suspendu sous la voilure de l'aéronef, le plancher 32 de protection thermique du mât et de la voilure vis-à-vis du flux primaire 36 constitue une portion inférieure du carénage 30, tandis qu'un longeron de fermeture 51, opposé au plancher 32, constitue une portion supérieure de ce carénage 30 (figure 1). Naturellement, la situation de ces deux éléments 32, 51 serait inversée dans le cas alternatif où le turboréacteur serait destiné à être implanté au-dessus de la voilure. D'ailleurs, il est noté que dans ce cas alternatif couvert par la présente invention, le carénage 30 deviendrait un carénage aérodynamique arrière supérieur.

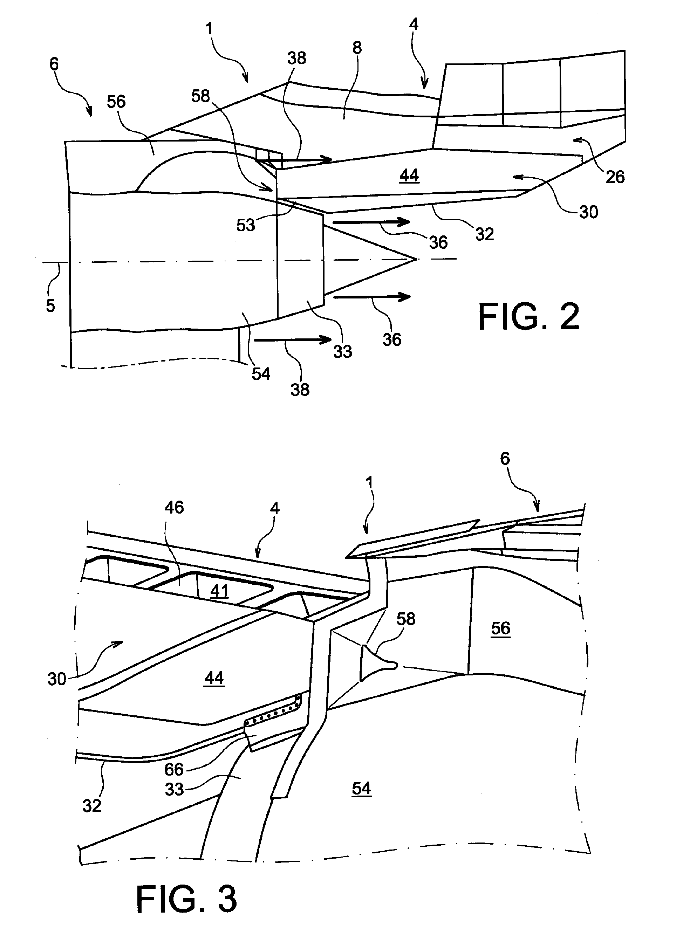

Enfin, comme cela est visible sur la figure 2, il est prévu qu'une partie d'extrémité avant 53 du plancher 32 s'étende en regard, à faible distance, d'une extrémité supérieure de la tuyère 33 (figure 4). Le jeu entre ce plancher 32 et la tuyère 33 définit un espace 55 compris entre ces deux éléments et est notamment prévu pour tenir compte des déformations du turboréacteur inhérentes aux différentes phases de fonctionnement de ce dernier.

Toujours de manière connue, le carénage aérodynamique arrière inférieur 30 en forme générale de caisson est monté sur la structure aérodynamique arrière 26 et la structure rigide 8 (figure 1). Le carénage 30 présente de préférence un plan de symétrie P correspondant à un plan XZ, ce plan P constituant également un plan vertical de symétrie pour l'ensemble du mât d'accrochage 4, et pour le moteur 6.

Les deux panneaux latéraux 44 du carénage 30 sont grossièrement orientés dans un plan XZ et disposés de part et d'autre du plan P. Ils sont assemblés entre eux par des nervures intérieures transversales de rigidification 46 espacées les unes des autres selon la direction X, chacune de ces nervures 46 étant orientée selon un plan YZ et prenant par exemple la forme d'un rectangle ou d'un carré.

Les panneaux latéraux 44 sont montés fixement et directement sur les portions latérales de chacune des nervures intérieures 46, à l'aide de moyens conventionnels connus de l'homme du métier.

D'autre part, le carénage 30 intègre le plancher de protection thermique 32 en partie inférieure du caisson, la partie supérieure étant fermée par le longeron de fermeture 51 opposé au plancher 32. Alternativement, la partie supérieure du caisson peut être dépourvue de longeron de fermeture, et seulement obturée par les éléments 8, 26 directement adjacents selon la direction Z.

Toujours en référence à la figure 1, on peut apercevoir que le carénage 30 se décompose en deux portions distinctes mais solidaires l'une de l'autre, à savoir une portion avant 50 constituant la majeure partie du carénage, par exemple 60 à 85 % de celui-ci en terme de longueur selon la direction X, et une portion arrière 52 plus réduite prenant globalement la forme d'une pyramide ou d'une pointe dont la base est reliée rigidement à la portion avant 50, et dont le sommet constitue une extrémité arrière du carénage 30. A titre indicatif, la portion avant 50 présente une section transversale grossièrement homogène sur toute sa longueur.

Les panneaux latéraux 44 et le longeron de fermeture 51 s'étendent de préférence chacun d'une seule pièce d'un bout à l'autre du carénage 30, c'est-à-dire à la fois le long de la portion avant 50, et le long de la portion arrière 52. En revanche, le plancher de protection thermique 32 s'étend lui de préférence d'une seule pièce uniquement sur la portion avant 50, et non sur la portion arrière 52, même si cela pourrait bien entendu être envisagé, sans sortir du cadre de l'invention. Cette particularité s'explique notamment par le fait que la portion arrière 52 en forme de pyramide s'éloigne progressivement de l'axe du moteur, de sorte que le flux primaire, qui perd de toute façon en intensité de chaleur en allant vers l'arrière, induit un impact thermique moindre sur l'élément inférieur de fermeture de la pyramide 52.

Le fait de prévoir chacun des éléments mentionnés ci-dessus d'une seule pièce n'exclut pas la possibilité de les fabriquer à l'aide de plusieurs portions distinctes rapportées fixement les unes aux autres, comme par exemple plusieurs portions se succédant selon la direction X. Cela vaut également pour les éléments suivants qui seront décrits comme étant susceptibles d'être fabriqués d'une seule pièce.

La figure 2 représente une partie arrière de l'ensemble propulsif 1, y compris une partie interne de la nacelle de cette ensemble 1, cette partie interne comprenant une enveloppe annulaire interne 54, parfois dénommée IFS (de l'anglais *« Inner Fan Structure »*), destinée à délimiter intérieurement le canal 40 de flux secondaire, ainsi que deux parois longitudinales 56, dont l'une seulement est visible sur la figure 2, qui sont raccordées à l'enveloppe interne 54 et destinées à guider le flux secondaire 38 autour de certaines parties du mât d'accrochage 4 qui traversent le canal 40 de flux secondaire, telle qu'une partie avant de la structure rigide 8 ainsi que les attaches moteur 10 et 12. Pour cela, les parois longitudinales 56 de la nacelle délimitent une cavité 62 (figure 4) qui est sensiblement isolée du flux secondaire dans laquelle s'étendent ces éléments du mât d'accrochage 4, et qui est couramment dénommée « bifurcation ». Dans ce qui suit, chaque paroi longitudinale 56 sera ainsi dénommée « paroi de bifurcation ».

Dans le premier mode de réalisation préféré de l'invention, chaque paroi de bifurcation 56 comprend une prise d'air 58 (figures 2 à 5) destinée à prélever une partie du flux secondaire du turboréacteur pour former un flux d'air de refroidissement 59 (figure 5).

La prise d'air 58 (figure 3) est de préférence une prise d'air aérodynamique présentant une configuration de type NACA, mais elle peut être en variante de tout autre type, et présenter éventuellement des moyens formant écope en saillie dans le flux secondaire.

Chaque prise d'air 58 est raccordée de manière étanche à un tuyau de circulation d'air 60 correspondant (figure 4) agencé à l'intérieur de la cavité 62 délimitée par les parois de bifurcation 56, et débouchant dans l'espace 55 précité, à proximité de l'extrémité avant de la tuyère d'échappement 33.

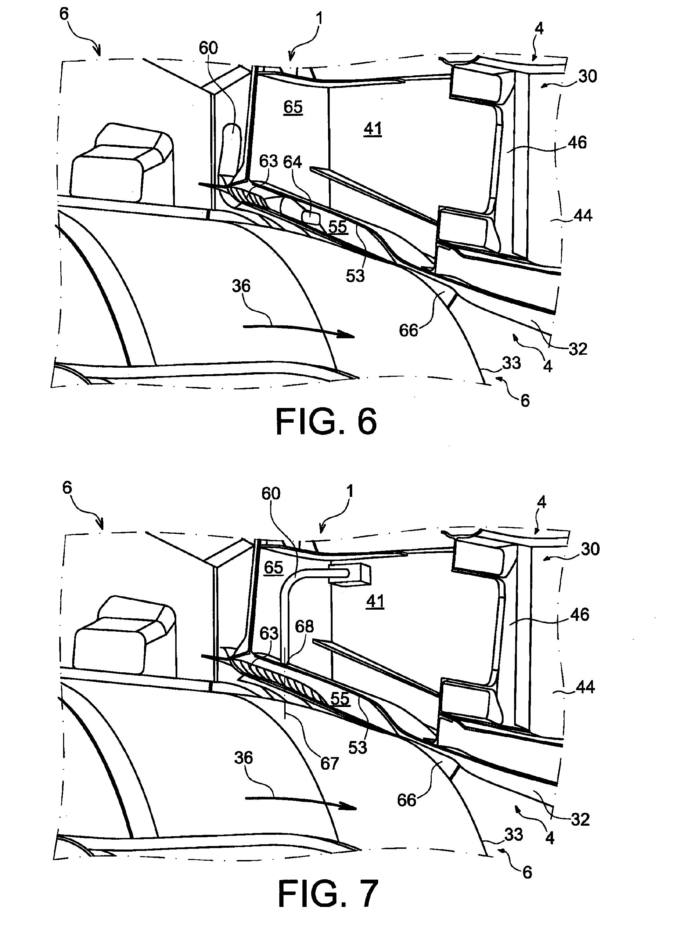

Plus précisément, chaque tuyau 60 présente une buse d'éjection d'air 64 (figures 5 et 6) disposée à proximité de l'extrémité avant de la tuyère 33, dirigée vers l'arrière, et dont l'axe d'éjection 67 est sensiblement parallèle à la partie d'extrémité avant 53 du plancher de protection thermique 32. Chaque buse d'éjection 64 permet ainsi la diffusion d'un flux d'air de refroidissement 65 d'une manière sensiblement tangentielle au plancher 32.

Dans l'exemple représenté sur ces figures, chaque tuyau 60 passe au travers d'un joint annulaire de protection thermique ou anti-feu 63, qui est par exemple un joint à languettes du type couramment appelé *« finger seal »* (figures 5 et 6), et qui relie sensiblement à étanchéité les extrémités amont respectives de la tuyère 33 et du plancher de protection thermique 32. A cet effet, il peut par exemple être prévu des espaces de passage respectifs pour les tuyaux 60, chacun de ces espaces étant ménagé entre deux languettes consécutives du joint 63 (figure 5).

De plus, dans cet exemple, les buses 64 des deux tuyaux 60 sont agencées sensiblement symétriquement par rapport au plan vertical de symétrie P de l'ensemble propulsif.

En outre, la figure 4 montre que les tuyaux 60 passent entre la tuyère 33 et le bord inférieur d'une paroi sensiblement verticale 65 de séparation entre la cavité 62 délimitée par les parois de bifurcation 56 et la cavité intérieure 41 du carénage aérodynamique arrière 30.

Par ailleurs, comme cela apparaît sur les figures 3 à 5, des joints souples latéraux 66 sont fixés sur chacun des panneaux latéraux 44 du carénage aérodynamique arrière 30 par leur extrémité supérieure de sorte que leur extrémité inférieure vienne au contact de la tuyère d'échappement 33.

Ces joints latéraux 66 permettent, d'une manière connue en soi, de limiter les risques de remontée d'air chaud du flux primaire dans l'espace 55 compris entre la partie d'extrémité avant 53 du plancher 32 et la tuyère 33.

Dans le cadre de l'invention, les joints latéraux 66 permettent en outre de canaliser le flux d'air de refroidissement provenant des tuyaux 60 dans l'espace 55 précité et donc d'optimiser le refroidissement du plancher 32 et de la tuyère 33.

La figure 7 illustre un deuxième mode de réalisation préféré de l'invention, qui diffère du premier mode de réalisation décrit ci-dessus du fait que les prises d'air 58 ne sont pas ménagées dans les parois de bifurcation 56 mais sont formées dans les panneaux latéraux 44 du carénage aérodynamique arrière 30, et du fait que les tuyaux 60 raccordées à ces prises d'air sont logés au sein de la cavité intérieure 41 de ce carénage et débouchent dans l'espace 55 précité au travers d'orifices 68 du plancher de protection thermique 32, selon un axe d'éjection d'air 67 sensiblement orthogonal à ce plancher 32.

## Revendications

1. Ensemble propulsif (1) pour aéronef, comportant un turboréacteur à double flux (6) ainsi qu'un mât d'accrochage (4) destiné à l'accrochage de ce turboréacteur à la voilure (2) ou au fuselage d'un aéronef, ledit mât d'accrochage (4) comprenant un carénage aérodynamique arrière (30) comportant un plancher de protection thermique (32) pour protéger ledit mât d'accrochage (4) de la chaleur d'un flux primaire (36) canalisé par une tuyère d'échappement (33) dudit turboréacteur, ledit ensemble propulsif (1) comprenant des moyens (58) de prélèvement d'un flux d'air de refroidissement dans un flux secondaire (38) dudit turboréacteur ainsi que des moyens de circulation d'air (60) alimentés par lesdits moyens de prélèvement (58) et présentant au moins un orifice de sortie (64, 68) débouchant dans un espace (55) compris entre ledit plancher de protection thermique (32, 53) et ladite tuyère d'échappement (33), lesdits moyens de prélèvement comprennent au moins une prise d'air (58) raccordée auxdits moyens de circulation d'air (60) et formée dans une paroi aérodynamique (44, 56) dudit ensemble propulsif (1), qui est épousée par ledit flux secondaire (38) en fonctionnement, et qui s'étend longitudinalement en regard d'une autre paroi aérodynamique (44, 56) similaire dudit ensemble propulsif (1), avec laquelle elle délimite une cavité (41, 62) sensiblement isolée dudit flux secondaire (38), **caractérisé en ce que** ledit carénage aérodynamique s'étend dans le prolongement d'une bifurcation formée de deux parois de bifurcation (56) reliant mutuellement deux enveloppes annulaires (54) de nacelle qui délimitent, respectivement intérieurement et extérieurement, un espace annulaire (40) d'écoulement d'un flux secondaire (38) dans ledit turboréacteur (6), et **en ce que** lesdites parois aérodynamiques sont lesdites parois de bifurcation (56) ou des parois latérales (44) dudit carénage aérodynamique arrière (30) .

2. Ensemble propulsif selon la revendication 1, **caractérisé en ce que** lesdits moyens de circulation d'air comprennent au moins un tuyau (60) s'étendant au moins en partie dans ladite cavité (41, 62) .

3. Ensemble propulsif selon l'une quelconque des revendications 1 ou 2, **caractérisé en ce que** ledit orifice de sortie (64) desdits moyens de circulation d'air (60) présente un axe d'éjection d'air (67) sensiblement parallèle à une partie d'extrémité avant (53) dudit plancher de protection thermique (32).

4. Ensemble propulsif selon l'une quelconque des revendications 1 ou 2, **caractérisé en ce que** ledit orifice de sortie (68) desdits moyens de circulation d'air (60) traverse ledit plancher de protection thermique (32).

5. Ensemble propulsif selon l'une quelconque des revendications précédentes, **caractérisé en ce qu'**il comprend des joints latéraux d'étanchéité (66) qui délimitent latéralement ledit espace (55) compris entre ledit plancher de protection thermique (32) et ladite tuyère d'échappement (33).

6. Aéronef comprenant au moins un ensemble propulsif (1) selon l'une quelconque des revendications précédentes.

7. Procédé de refroidissement d'un plancher de protection thermique (32) d'un carénage aérodynamique arrière (30) d'un mât d'accrochage (4) d'un ensemble propulsif (1) selon l'une quelconque des revendications 1 à 5, dans lequel de l'air de refroidissement (65) est prélevé dans le flux secondaire (38) du turboréacteur (6) de cet ensemble propulsif (1) par lesdits moyens de prélèvement (58) et est injecté dans ledit espace (55) compris entre ledit plancher de protection thermique (32) et ladite tuyère d'échappement (33) dudit turboréacteur par lesdits moyens de circulation d'air (60).

8. Procédé selon la revendication 7, **caractérisé en ce que** l'air de refroidissement (65) est injecté dans ledit espace (55) selon une direction sensiblement parallèle audit plancher de protection thermique (32) de manière à former un film d'air de refroidissement entre ledit plancher de protection thermique (32) et ledit flux primaire (36) du turboréacteur (6).

## Patentansprüche

1. Antriebseinheit (1) für ein Luftfahrzeug, die ein Zweistrom-Turbostrahltriebwerk (6) sowie einen Aufhängungsmast (4) aufweist, der zur Aufhängung dieses Turbostrahltriebwerks an der Tragfläche (2) oder am Rumpf eines Luftfahrzeugs bestimmt ist, wobei der Aufhängungsmast (4) eine hintere aerodynamische Verkleidung (30) enthält, die einen Wärmeschutzboden (32) aufweist, um den Aufhängungsmast (4) vor der Wärme eines Primärstroms (36) zu schützen, der von einem Abgasrohr (33) des Turbostrahltriebwerks kanalisiert wird, wobei die Antriebseinheit (1) Einrichtungen (58) zur Entnahme eines Kühlluftstroms aus einem Sekundärstrom (38) des Turbostrahltriebwerks sowie Luftzirkulationseinrichtungen (60) enthält, die von den Entnahmeeinrichtungen (58) gespeist werden und mindestens eine Ausgangsöffnung (64, 68) aufweisen, die in einen zwischen dem Wärmeschutzboden (32, 53) und dem Abgasrohr (33) liegenden Raum (55) mündet, wobei die Entnahmeeinrichtungen mindestens einen Lufteinlass (58) enthalten, der an die Luftzirkulationseinrichtungen (60) angeschlossen und in einer aerodynamischen Wand (44, 56) der Antriebseinheit (1) geformt ist, an die sich der Sekundärstrom (38) im Betrieb anpasst, und die sich in Längsrichtung gegenüber einer anderen gleichen aerodynamischen Wand (44, 56) der Antriebseinheit (1) erstreckt, mit der sie einen im Wesentlichen vom Sekundärstrom (38) isolierten Hohlraum (41, 62) begrenzt, **dadurch gekennzeichnet, dass** die aerodynamische Verkleidung sich in der Verlängerung einer Verzweigung erstreckt, die von zwei Verzweigungswänden (56) geformt wird, die zwei ringförmige Gondelhüllen (54) miteinander verbinden, die innen bzw. außen einen Ringraum (40) für die Strömung eines Sekundärstroms (38) im Turbostrahltriebwerk (6) begrenzen, und dass die aerodynamischen Wände die Verzweigungswände (56) oder Seitenwände (44) der hinteren aerodynamischen Verkleidung (30) sind.

2. Antriebseinheit nach Anspruch 1, **dadurch gekennzeichnet, dass** die Luftzirkulationseinrichtungen mindestens ein Rohr (60) enthalten, das sich zumindest zum Teil im Hohlraum (41, 62) erstreckt.

3. Antriebseinheit nach einem der Ansprüche 1 oder 2, **dadurch gekennzeichnet, dass** die Ausgangsöffnung (64) der Luftzirkulationseinrichtungen (60) eine Luftausstoßachse (67) aufweist, die im Wesentlichen parallel zu einem vorderen Endbereich (53) des Wärmeschutzbodens (32) ist.

4. Antriebseinheit nach einem der Ansprüche 1 oder 2, **dadurch gekennzeichnet, dass** die Ausgangsöffnung (68) der Luftzirkulationseinrichtungen (60) den Wärmeschutzboden (32) durchquert.

5. Antriebseinheit nach einem der vorhergehenden Ansprüche, **dadurch gekennzeichnet, dass** sie seitliche Dichtungen (66) aufweist, die den Raum (55) zwischen dem Wärmeschutzboden (32) und dem Abgasrohr (33) seitlich begrenzen.

6. Luftfahrzeug, das mindestens eine Antriebseinheit (1) nach einem der vorhergehenden Ansprüche enthält.

7. Verfahren zur Kühlung eines Wärmeschutzbodens (32) einer hinteren aerodynamischen Verkleidung (30) eines Aufhängungsmasts (4) einer Antriebseinheit (1) nach einem der Ansprüche 1 bis 5, wobei Kühlluft (65) im Sekundärstrom (38) des Turbostrahltriebwerks (6) dieser Antriebseinheit (1) durch die Entnahmeeinrichtungen (58) entnommen und in den zwischen dem Wärmeschutzboden (32) und dem Abgasrohr (33) des Turbostrahltriebwerks befindlichen Raum (55) durch die Luftzirkulationseinrichtungen (60) eingespeist wird.

8. Verfahren nach Anspruch 7, **dadurch gekennzeichnet, dass** die Kühlluft (65) in den Raum (55) gemäß einer Richtung im Wesentlichen parallel zum Wärmeschutzboden (32) eingespeist wird, um einen Kühlluftfilm zwischen dem Wärmeschutzboden (32) und dem Primärstrom (36) des Turbostrahltriebwerks (6) zu formen.

## Claims

1. Propulsion system (1) for an aircraft, including a dual-flow turbojet (6) and a mounting structure (4) intended to mount this turbojet to the wing surface (2) or to the fuselage of the aircraft, where the said mounting structure (4) includes an aft aerodynamic fairing (30) including a thermal protection floor (32) to protect the said mounting structure (4) from the heat of a primary airstream (36) channelled by an exhaust nozzle (33) of the said turbojet, the said propulsion system including means (58) for extracting a cooling airstream from a secondary airstream (38) of the said turbojet, together with air circulation means (60) fed by the said extraction means (58) and having at least one outlet aperture (64, 68) emerging into a space (55) between the said thermal protection floor (32, 53) and the said exhaust nozzle (33), wherein the said extraction means include at least one air inlet (58) connected to the said air circulation means (60) and formed in an aerodynamic wall (44, 56) of the said propulsion system (1), which is closely followed by the said secondary airstream (38) during operation, and which extends longitudinally and facing another similar aerodynamic wall (44, 56) of the said propulsion system (1), with which it delimits a cavity (41, 62) essentially isolated from the said secondary airstream (38), **characterized in that** the said aerodynamic fairing extends in the extension of a bifurcation formed of two bifurcation walls (56) mutually connecting two annular nacelle cases (54) which delimit, respectively internally and externally, an annular space (40) for a secondary airstream (38) to flow in the said turbojet, and **in that** the said aerodynamic walls are the said bifurcation walls (56) or side walls (44) of the said aft aerodynamic fairing (30).

2. A propulsion system according to claim 1, **characterized in that** the said air circulation means include at least one pipe (60) extending at least partly in the said cavity (41, 62).

3. A propulsion system according to any one of claim 1 or 2, **characterized in that** the said outlet aperture (64) of the said air circulation means (60) has an air ejection axis (67) which is essentially parallel to a front end portion (53) of the said thermal protection floor (32).

4. A propulsion system according to any one of claim 1 or 2, **characterized in that** the said outlet aperture (68) of the said air circulation means (60) traverses the said thermal protection floor (32).

5. A propulsion system according to any one of the preceding claims, **characterized in that** it includes side sealing joints (66) which laterally delimit the said space (55) between the said thermal protection floor (32) and the said exhaust nozzle (33).

6. An aircraft including at least one propulsion system (1) according to any one of the preceding claims.

7. A method of cooling a thermal protection floor (32) of an aft aerodynamic fairing (30) of a structure (4) for mounting a propulsion system (1) according to any one of claims 1 to 5, in which cooling air (65) is extracted from the secondary airstream (38) of the turbojet (6) of this propulsion system (1) by the said extraction means (58), and is injected into the said space (55) comprised between the said thermal protection floor (32) and the said exhaust nozzle (33) of the turbojet by the said air circulation means (60).

8. A method according to claim 7, **characterized in that** the cooling air (65) is injected into the said space (55) in a direction essentially parallel to the said thermal protection floor (32) so as to form a cooling film of air between the said thermal protection floor (32) and the said primary airstream (36) of the turbojet (6).
